# EUROPEAN PATENT SPECIFICATION

(11) **EP 3 329 381 B1**
(45) Date of publication and mention of the grant of the patent: **26.02.2020**
(21) Application number: 16829923.8
(22) Date of filing: 19.07.2016
(51) Int. Cl.: G06F 13/42, G06F 13/16, G06F 1/32

(54) **SEAMLESS ADDITION OF HIGH BANDWIDTH LANES**
NAHTLOSE ZUGABE VON SPUREN MIT HOHER BANDBREITE
ADDITION SANS INTERRUPTION DE CHEMINS À GRANDE LARGEUR DE BANDE

(30) Priority: 30.07.2015 US 201562198724 P
(43) Date of publication of application: 06.06.2018
(73) Proprietor: Valens Semiconductor Ltd., 45240 Hod Hasharon (IL)
(72) Inventor: LIDA, Eyran, 73134 Kfar Ha-Oranim (IL); SALAMON, Aviv, 43563 Raanana (IL)
(74) Representative: Dallimore, Geoffrey Robert
(86) International application number: PCT/IB2016/054296
(87) International publication number: WO 2017/017562

(56) References cited:
- US-A1- 2007 067 548
- US-A1- 2007 150 762
- US-A1- 2011 173 352
- US-A1- 2013 077 701
- US-A1- 2013 266 046
- US-A1- 2014 112 339
- US-B1- 8 437 343

## Description

### BACKGROUND

In order to save power in electronic devices, there is a need to turn off hardware modules, such as inter chip communication lanes (channels), when they are not in use. However, switching on and off (i.e. activating and deactivating) all of the inter chip communication lanes is problematic in a fixed delay high-bandwidth communication network because a buffer is needed to maintain the fixed delay during the training phase of the additional communication lanes. Selective lane activation is known from US2011/173352, US2013/077701, US2007/067548 and US2007/150762.

### BRIEF SUMMARY

In one embodiment, a method for seamless activation of new high bandwidth lanes between first and second devices includes the following steps: exchanging indications between the first and second devices about activating the new high bandwidth lanes; wherein during the exchanging of the indications, the first device sends data to the second device using 8b/10b code words with a fixed delay over at least one first-to-second (f2s) active high bandwidth lane, the second device sends data to the first device using 8b/10b code words with a fixed delay over at least one second-to-first (s2f) active high bandwidth lane, and the new high bandwidth lanes are off; wherein adding the new high bandwidth lanes is to be done without interrupting the fixed delay transmissions over the f2s and s2f active high bandwidth lanes; sending, by the first device, an idle sequence using 7b/10b code words over the new high bandwidth lanes in parallel to continue to send and receive the 8b/10b data with a fixed delay over the f2s and s2f active high bandwidth lanes; sending, by the first device over the at least one f2s active high bandwidth lane, a synchronization sequence during an inter packet gap; and further comprising sending by the first device, over the new high bandwidth lanes and in parallel to a predetermined point within the synchronization sequence, a known non-idle sequence; utilizing, by the second device, the known non-idle sequence for deskewing the new high bandwidth lanes; and sending, by the first device, a transition sequence over both the at least one f2s active high bandwidth lane and the new high bandwidth lanes, and immediately thereafter the first device is ready to transmit high bandwidth data using 8b/10b code words over both the at least one f2s active high bandwidth lane and the new high bandwidth lanes.

### BRIEF DESCRIPTION OF THE DRAWINGS

The embodiments are herein described, by way of example only, with reference to the accompanying drawings. In the drawings:
FIG. 1A illustrates one embodiment of a system that includes inter chip bi-directional connections, including ten low-voltage differential signaling (LVDS) pairs;
FIG. 1B illustrates one embodiment of lanes configured according to an operation mode corresponding to the startup phase of the inter chip bi-directional connections;
FIG. 1C, FIG. 1D, FIG. 1E, FIG. 1F, FIG. 1G, and FIG. 1H illustrate various lane operational modes with master and slave configuration;
FIG. 1I illustrates one embodiment of a system that does not include a designated clock lane;
FIG. 2A illustrates one embodiment of a Physical Coding Sublayer (PCS) that uses a word deserializer to spread the coded words over the lanes directed from the master to the slave;
FIG. 2B and FIG. 2C illustrate one embodiment of a novel method for seamless activation of high bandwidth lanes from the master to the slave;
FIG. 2D illustrates one embodiment of a method for seamless deactivation of high bandwidth lanes from the master to the slave;
FIG. 2E and FIG. 2F illustrate one embodiment of a novel method for seamless activation of high bandwidth lanes from the slave to the master;

### DETAILED DESCRIPTION

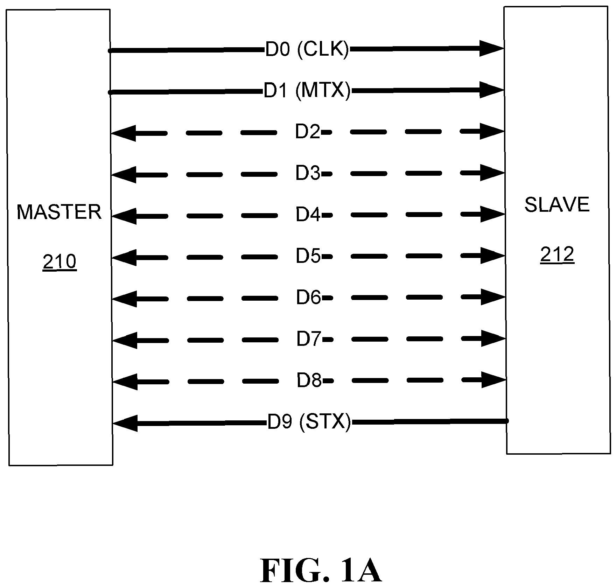

FIG. 1A illustrates one embodiment of a system that includes inter chip bi-directional connections, including ten low-voltage differential signaling (LVDS) pairs D0 to D9. Lane D0 carries the clock from a master 210 to a slave 212. Lane D1 is a unidirectional communication link from the master 210 to the slave 212. Unidirectional lanes D2 to D8 can be utilized both ways, depending on the operation mode of the master 210 and/or the slave 212. Lane D9 is a unidirectional communication link from the slave 212 to the master 210. In one example, each LDVS lane D1 to D9 can transmit high bandwidth communication of more than 1Gbps with 8b/10b coding. In another example, each LDVS lane D1 to D9 can transmit up to about 2.5Gbps with 8b/10b coding. In still another example, the LVDS Clock Lane D0 operates at a frequency of 250MHz, and the clock is provided by the master 210.

In different embodiments, the number of connections included in the inter chip bi-directional connections D0-D9 may be different from the ten illustrated low-voltage differential signaling (LVDS) pairs. For example, in some embodiments, the number of connections may be greater than ten or lower than ten. However, regardless of the number of connections, the inter chip bi-directional connections are to include at least the following connections: at least one high bandwidth lane from the master to the slave, at least one high bandwidth lane from the slave to the master, and at least one unidirectional lane that can be utilized both ways depending on the operation mode of the system. In this disclosure, the order of the lanes in the inter chip bi-directional connections, e.g., as they appear in FIG. 1A, is just for illustrative purposes and any lane order may be pursued. For example, one system comprising inter chip bi-directional connections may include four LVDS pairs, including: a high bandwidth lane from the slave to the master, a unidirectional lane that can be utilized both ways depending on the operation mode, a high bandwidth lane from the master to the slave, and a clock lane. In another example, another system including inter chip bi-directional connections may include fourteen LVDS pairs, including: a high bandwidth lane from the slave to the master, eleven unidirectional lanes that can be utilized both ways depending on the operation mode, a high bandwidth lane from the master to the slave, and a clock lane.

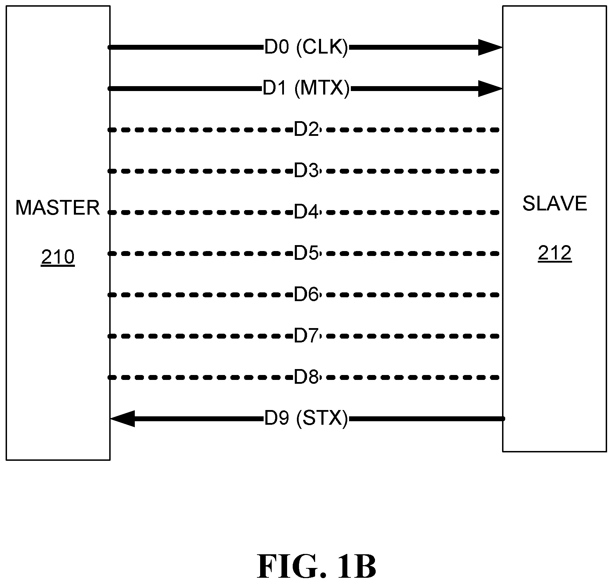

FIG. 1B illustrates one embodiment of a system that includes inter chip bi-directional connections. In this embodiment, the communication lanes are configured according to an operation mode corresponding to the startup phase of the inter chip bi-directional connections. The startup phase starts with setting unidirectional lanes D0 and D1 from the master 210 to the slave 212, and unidirectional lane D9 from the slave 212 to the master 210. The dotted lines of lanes D2 to D8 represent that they are off during the startup phase.

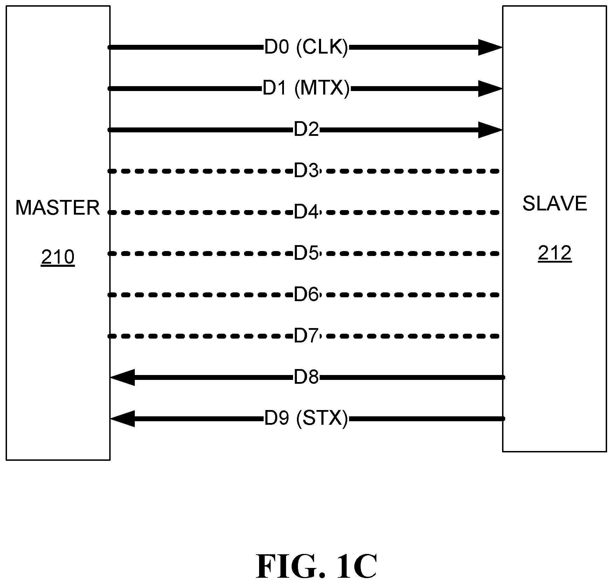

FIG. 1C illustrates a system that includes inter chip bi-directional connections, with the communication lanes configured according to an operational mode in which the inter chip bi-directional connections operate two unidirectional high-bandwidth lanes D1-D2 from the master 210 to the slave 212. Additionally, in this operational mode two unidirectional lanes D8-D9 are operated from the slave 212 to the master 210. The lanes D3-D7 are off when the system is in this operational mode illustrated in FIG. 1C.

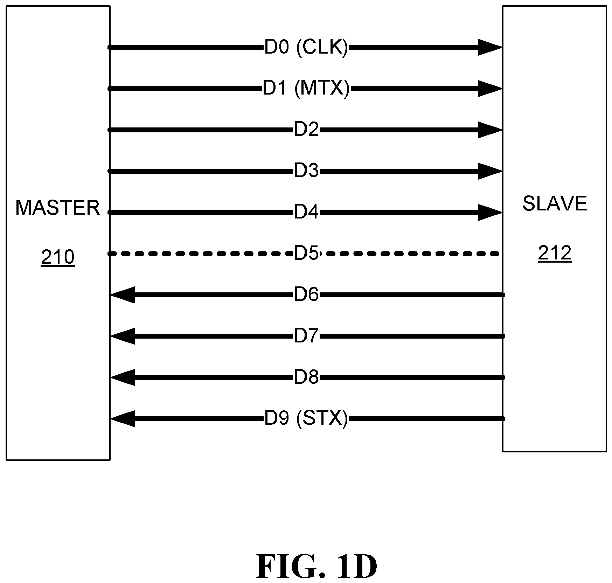

FIG. 1D illustrates a system that includes inter chip bi-directional connections, with the communication lanes configured according to an operational mode in which the inter chip bi-directional connections operate four unidirectional high-bandwidth lanes D1-D4 from the master 210 to the slave 212. Additionally, in this operational mode four unidirectional lanes D6-D9 are operated from the slave 212 to the master 210. The lane D5 is off when the system is in the operational mode illustrated in FIG. 1D.

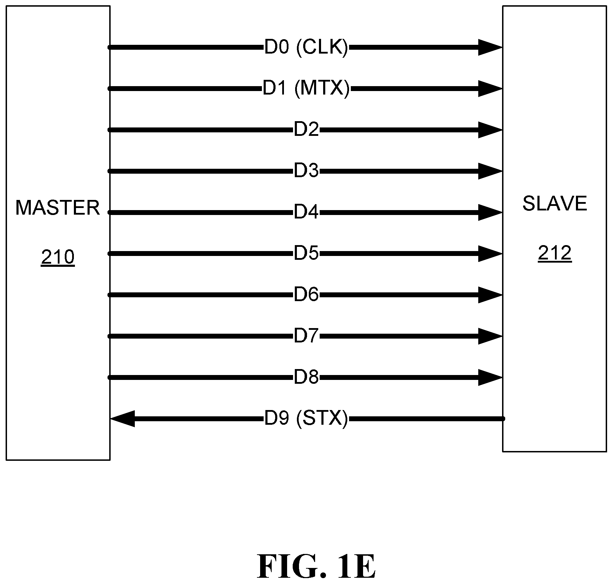

FIG. 1E illustrates a system that includes inter chip bi-directional connections, with the communication lanes configured according to an operational mode in which the inter chip bi-directional connections operate eight unidirectional high-bandwidth lanes D1-D8 from the master 210 to the slave 212. Additionally, in this operational mode one unidirectional lane D9 is operated from the slave 212 to the master 210.

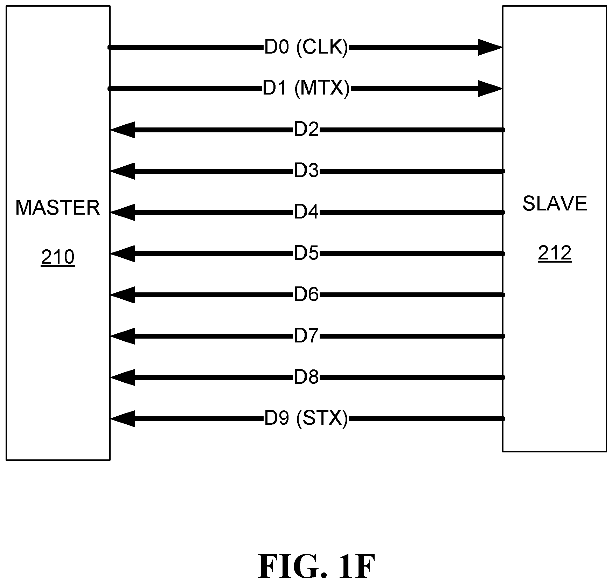

FIG. 1F illustrates a system that includes inter chip bi-directional connections, with the communication lanes configured according to an operational mode in which the inter chip bi-directional connections operate one unidirectional high-bandwidth lane D1 from the master 210 to the slave 212. Additionally, in this operational mode eight unidirectional lanes D2-D9 are operated from the slave 212 to the master 210.

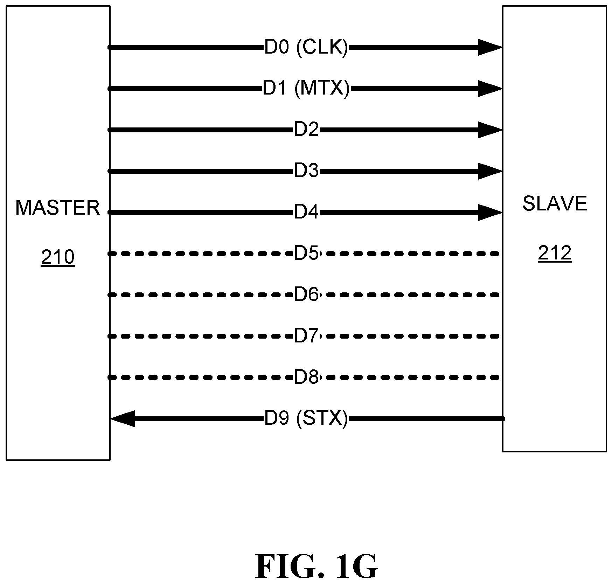

FIG. 1G illustrates a system that includes inter chip bi-directional connections, with the communication lanes configured according to an operational mode in which the inter chip bi-directional connections operate four unidirectional high-bandwidth lanes D1-D4 from the master 210 to the slave 212. Additionally, in this operational mode one unidirectional lane D9 is operated from the slave 212 to the master 210. The lanes D5-D8 are off when the system is in the operational mode illustrated in FIG. 1G.

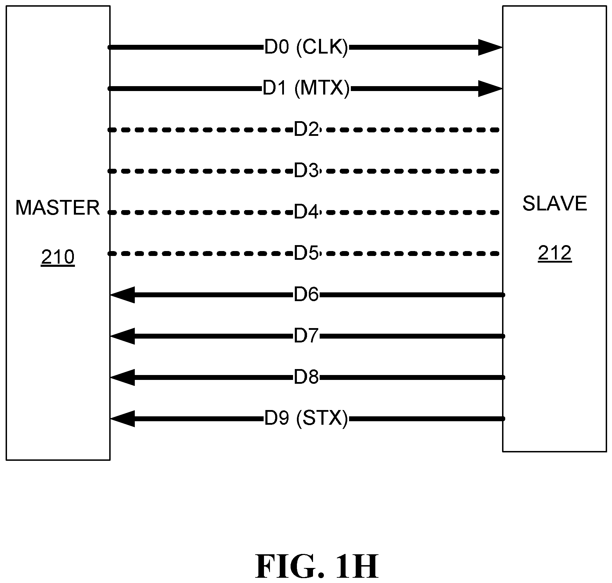

FIG. 1H illustrates a system that includes inter chip bi-directional connections, with the communication lanes configured according to an operational mode in which the inter chip bi-directional connections operate one unidirectional high-bandwidth lane D1 from the master 210 to the slave 212. Additionally, in this operational mode four unidirectional lanes D6-D9 are operated from the slave 212 to the master 210. The lanes D2-D5 are off when the system is in the operational mode illustrated in FIG. 1H.

In one embodiment, in order to the switch from a first operational mode to a second operational mode, while maintaining a fixed delay and without using buffers to compensate for the training time, the master 210 and the slave 212 exchange messages related to the mode switching. Optionally, the exchange is performed over lanes D1 and D9. Following that, the master 210 and the slave 212 perform lane acquisition using a known training sequence, while continuing to transmit data over the lanes that are shared among the first and second operational modes.

One of the problems of a parallel communication link, such as described in the embodiments above, is to determine, after lane acquisition, when to start transmitting data in a synchronized manner over all the lanes. In order to solve this problem, the training sequence and the idle sequence utilize a known sequence that is spread over all the high bandwidth lanes in the same direction.

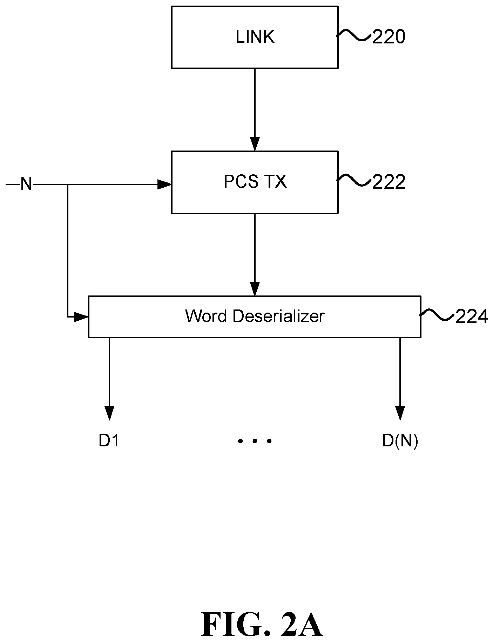

FIG. 2A illustrates one embodiment of a Physical Coding Sublayer (PCS) that uses a word deserializer 224 to spread the coded words over the lanes directed from the master 210 to the slave 212. In one example, the PCS applies 7b/10b coding during the training and idle times, and 8b/10b coding during data time. The 7 bit words required for the 7b/10b coding during the training and idle times may be received from the PCS scrambler that may advance 7 bits every clock cycle. The 8 bit words required for the 8b/10b coding during the data time are received form the link layer 220. The word deserializer 224 dispatches the code words received from the PCS 222 over the high bandwidth lanes directed from the master 210 to the slave 212. In one example, the word deserializer 224 uses a predetermined scheduling, such as round robin scheduling, and serializes the words per lane, least significant bit (LSB) first.

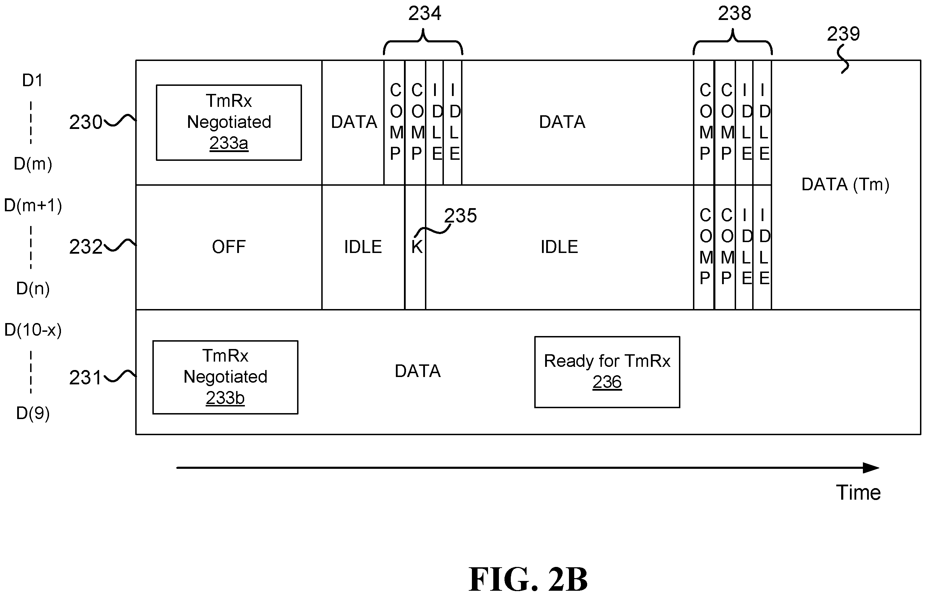

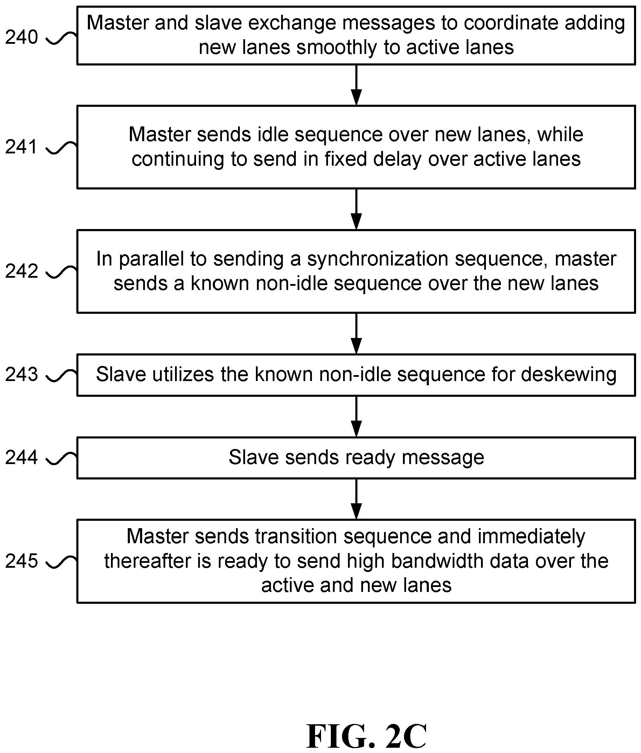

FIG. 2B and FIG. 2C illustrate one embodiment of a novel method for seamless activation of high bandwidth lanes from the master 210 to the slave 212.

In step 240, the master 210 sends data to the slave 212 with a fixed delay over one or more master-to-slave (m2s) active high bandwidth lanes D1-D(m), denoted by 230; the slave 212 sends data to the master 210 with a fixed delay over one or more slave-to-master (s2m) active high bandwidth lanes D(10-x)-D(9), denoted by 231; and one or more new high bandwidth lanes D(m+1)-D(n), denoted by 232, are off. In order to activate the new high bandwidth lanes D(m+1)-D(n) smoothly and without interrupting the fixed delay transmissions over the m2s and s2m active high bandwidth lanes, the master 210 and slave 212 exchange messages (233a, 233b).

In step 241, the master 210 sends an idle sequence over the new high bandwidth lanes D(m+1)-D(n). During that time, the master 210 and the slave 212 continue to send high bandwidth data with a fixed delay over the active high bandwidth lanes 230 and 231, respectively. Optionally, the idle sequence is encoded using 7b/10b coding of the 7 LSBs of 8 bits of the master PCS scrambler.

In step 242, the master 210 sends to the slave 212, over the active high bandwidth lanes D(1)-D(m), a synchronization sequence during an inter packet gap (IPG). The synchronization sequence is encoded with a higher error resistance than the error resistance of a data payload, and thus the synchronization sequence enables the slave 212 to identify the synchronization sequence with a higher probability than the probability of identifying a data payload. In one example, the synchronization sequence includes at least one bitwise complement 7b/10b code word of the expected idle code word, followed by at least one idle 7b/10b code word. In another example, illustrated in FIG. 2B, the synchronization sequence 234 includes two bitwise complement 7b/10b code words of the expected idle code words (denoted by COMP), followed by two idle 7b/10b code words (denoted by IDLE), sent over the active high bandwidth lanes D1-D(m).

In parallel to a predetermined point within the synchronization sequence, the master 210 sends to the slave 212, over the new high bandwidth lanes D(m+1)-D(n), a known non-idle sequence that includes one or more non-idle symbols. In one example, the known non-idle sequence is a /K/ symbol. In another example, the idle sequence is encoded using 7b/10b coding of the 7 LSBs of 8 bits of the master PCS scrambler, and the known non-idle sequence is not encoded the same way as the idle sequence. In still another example, the known non-idle sequence is a bitwise complement code word of the expected idle code word. In one example, the accuracy of the predetermined point within the synchronization sequence is one bit. FIG. 2B illustrates one example where the /K/ symbol 235 is sent over the new high bandwidth lanes D(n+1)-D(m) in parallel to the second bitwise complement code word. In another example, the /K/ symbol is sent in parallel over both the m2s active high bandwidth lanes and the new high bandwidth lanes.

The /K28.5/ symbol, also known as /K/, is a special control symbol within the 7b/10b and 8b/10b line codes. /K/ symbols scattered in a data stream allow synchronizing the master and slave. The 7b/10b line code maps 7-bit symbols to 10-bit symbols to achieve DC-balance and bounded disparity, while providing enough state changes to allow reasonable clock recovery. The /K/ symbol includes a special bit sequence that does not occur in a bit sequence generated with 7b/10b encoding even across symbol boundaries.

In step 243, the slave 212 utilizes the known non-idle sequence, which was sent in parallel to the predetermined point within the synchronization sequence, for deskewing the new high bandwidth lanes D(m+1)-D(n) in relation to the active high bandwidth lanes D1-D(m).

Optionally, steps 242-243 are repeated as needed. In one example, steps 242-243 are repeated randomly every 65 to 128 7b/10b symbols. The /K/ symbols are used by the slave 212 to synchronize itself to the 10B symbol boundaries and for deskewing lanes D(m+1)-D(n). Additionally, the slave 212 may reflect the received /K/ symbols back to the master 210 over lanes D(10-x)-D(9), enabling the master 210 to measure the round-trip delay between the master 210 and the slave 212 by counting the time between sending the /K/ symbol and receiving the reflected /K/ symbol. This unique method of transmitting at least one bitwise complement code word followed by at least one idea code word enables the slave 212 to synchronize itself on the new high bandwidth lanes, without interrupting the fixed delay transmissions over the active high bandwidth lanes. In one example, this unique method operates without buffers for storing and delaying the entire traffic to be sent during the setup time of the new high bandwidth lanes.

In optional step 244, the slave 212 sends to the master 210 a message indicating it is ready to receive data. Optionally, the ready message is transmitted over at least one of the active high bandwidth lanes D(10-x)-D(9) from the slave to the master. Additionally or alternatively, the slave and/or the master may count time and/or clock cycles until the slave is assumed to be ready to receive data.

And in step 245, during an IPG over the active high bandwidth lanes D1-D(m), the master 210 sends a transition sequence over both the m2s active high bandwidth lanes and the new high bandwidth lanes D1-D(n). Immediately thereafter (i.e., on the next symbol time), the master 210 is ready to transmit high bandwidth data packets over both the active and new high bandwidth lanes D1-D(n). The transition sequence includes at least one bitwise complement code word of the expected idle code word, followed by at least one idle code word that is sent over both the active and new high bandwidth lanes D1-D(n). In one example, illustrated in FIG. 2B, the transition sequence 238 includes two bitwise complement code words of the expected idle code words, followed by two idle code words, sent over the high bandwidth lanes D1-D(n), followed by high bandwidth data 239 sent over the high bandwidth lanes D1-D(n) directed from the master to the slave. The transition sequence may or may not be the same as the synchronization sequence.

In one embodiment, the difference between the idle sequence and the training sequence (used in steps 241-244) is that the training sequence also includes the /K/ symbols that are not included in the idle sequence after acquiring the lanes. Other implementations may be conceived, such as implementations involving a training sequence that is based on a modified idle sequence combined with /K/ symbols.

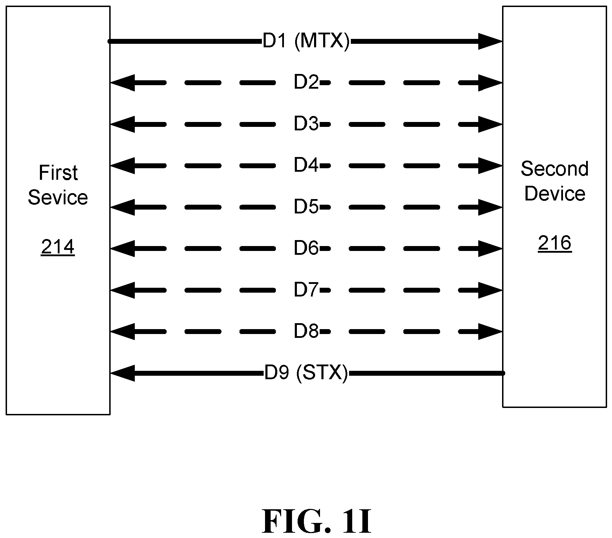

FIG. 1I illustrates one embodiment of a system that does not include a fixed clock lane. In this case, the master and slave are generalized as first and second devices, where a specific embodiment of the first and second devices does include and clock lane between master and slave devices. It is noted that the order is not important and the master may be either the first device or the second device. FIG. 1I illustrates inter chip bi-directional connections, including nine low-voltage differential signaling (LVDS) pairs D1 to D9. Lane D1 is a unidirectional communication link from the first device 214 to the second device 216. Unidirectional lanes D2 to D8 can be utilized both ways, depending on the operation mode of the first and second devices 214 and 216. Lane D9 is a unidirectional communication link from the second device 216 to the first device 214.

In one embodiment, a method for seamless activation of new high bandwidth lanes between first and second devices includes the following steps: (i) exchanging indications between the first and second devices about activating the new high bandwidth lanes; wherein during the exchanging of the indications, the first device sends data to the second device using 8b/10b code words with a fixed delay over at least one first-to-second (f2s) active high bandwidth lane, the second device sends data to the first device using 8b/10b code words with a fixed delay over at least one second-to-first (s2f) active high bandwidth lane, and the new high bandwidth lanes are off; wherein activating the new high bandwidth lanes is to be done smoothly and without interrupting the fixed delay transmissions over the f2s and s2f active high bandwidth lanes; (ii) sending, by the first device, an idle sequence using 7b/10b code words over the new high bandwidth lanes in parallel to continuing to send and receive the 8b/10b data with a fixed delay over the f2s and s2f active high bandwidth lanes; (iii) sending, by the first device over the at least one f2s active high bandwidth lane, a synchronization sequence during an inter packet gap; and further comprising sending by the first device, over the new high bandwidth lanes and in parallel to a predetermined point within the synchronization sequence, a known non-idle sequence; (iv) utilizing, by the second device, the known non-idle sequence for deskewing the new high bandwidth lanes; and (v) sending, by the first device, a transition sequence over both the at least one f2s active high bandwidth lane and the new high bandwidth lanes, and immediately thereafter the first device is ready to transmit high bandwidth data using 8b/10b code words over both the at least one f2s active high bandwidth lane and the new high bandwidth lanes.

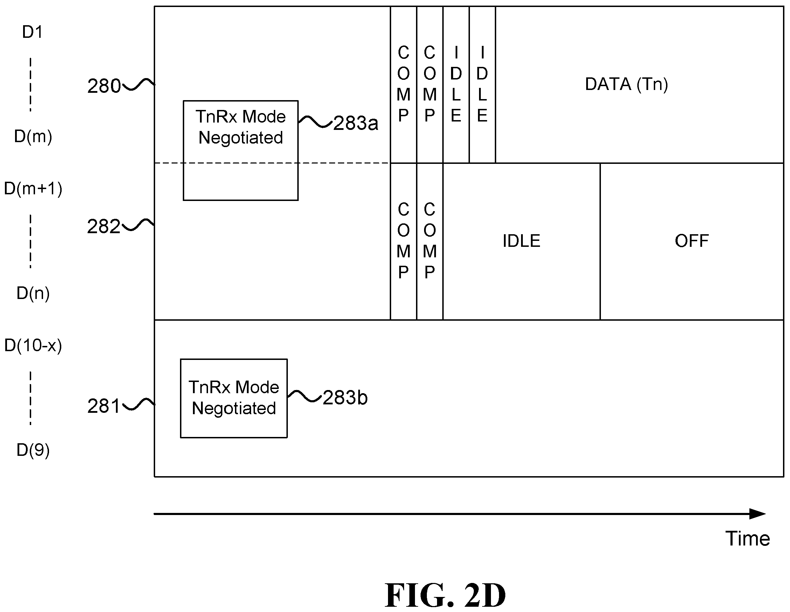

FIG. 2D illustrates one embodiment of a method for seamless deactivation of high bandwidth lanes from the master 210 to the slave 212.

The master 210 sends data to the slave 212 with a fixed delay over one or more m2s active high bandwidth lanes D1-D(m), denoted by 280. Additionally, the master 210 sends data to the slave 212 with a fixed delay over one or more m2s active high bandwidth lanes D(m+1)-D(n), denoted by 282. The slave 212 sends data to the master 210 with a fixed delay over one or more s2m active high bandwidth lanes D(10-x)-D(9), denoted by 281. In order to deactivate m2s active high bandwidth lanes 282 smoothly, and without interrupting the fixed delay transmissions over the m2s and s2m active high bandwidth lanes 280 and 281, the master 210 and slave 212 exchange messages (283a, 283b). Following the exchange, the master 210 sends to the slave 212, over the active high bandwidth lanes 282, a lane off sequence during an IPG, followed by at least one idle symbol, and then the high bandwidth lanes 282 are turned off. In one example, illustrated in FIG. 2D, the lane off sequence that is sent over the high bandwidth lanes 282 includes two bitwise complement 7b/10b code words of the expected idle code words, followed by at least three idle 7b/10b code words.

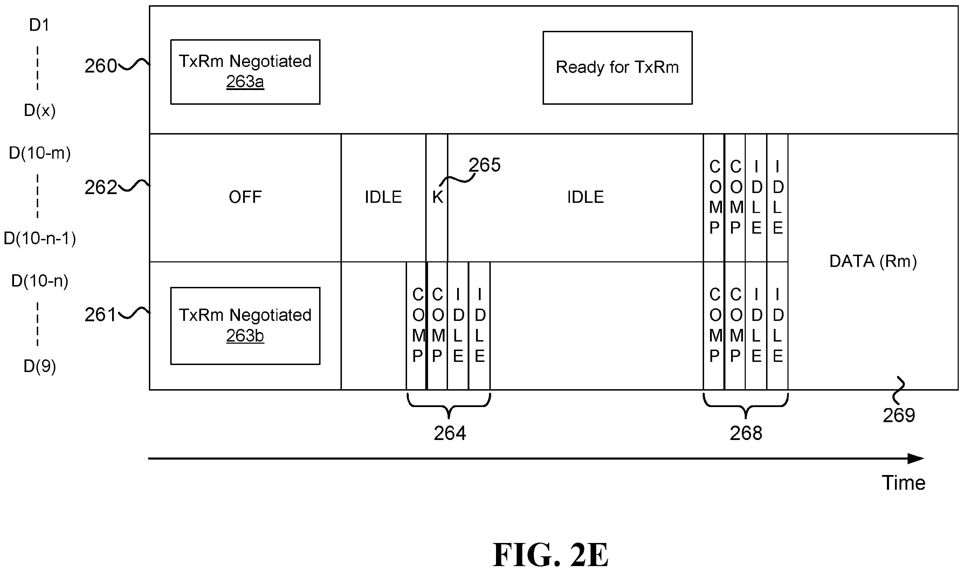

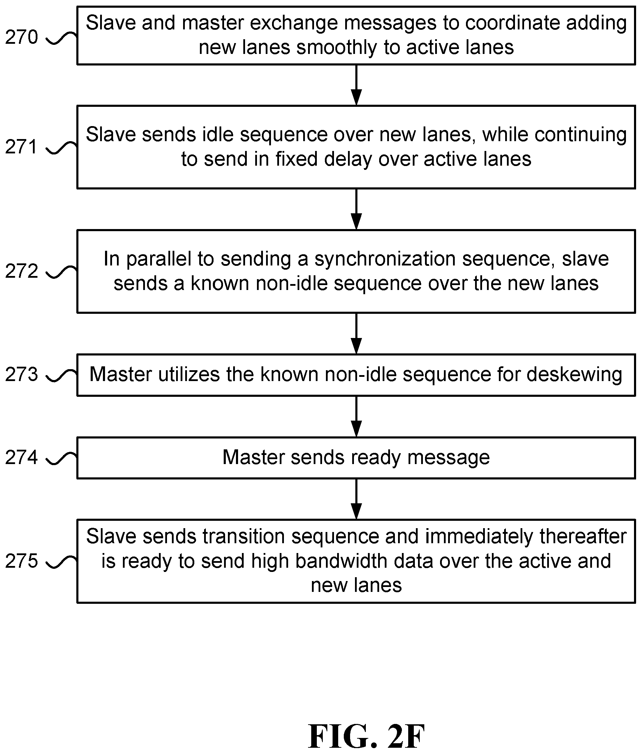

FIG. 2E and FIG. 2F illustrate one embodiment of a novel method for seamless activation of high bandwidth lanes from the slave 212 to the master 210.

In step 270, the slave 212 sends data to the master 210 with a fixed delay over one or more slave-to-master (s2m) active high bandwidth lanes D(10-n)-D(9), denoted by 261. The master 210 sends data to the slave with a fixed delay over one or more master-to-slave (m2s) active high bandwidth lanes D1-D(x), denoted by 260. Additionally, during this step, one or more new high bandwidth lanes D(10-m)-D(10-n-1), denoted by 262, are off. In order to activate the new high bandwidth lanes 262 smoothly, and without interrupting the fixed delay transmissions over the m2s and s2m active high bandwidth lanes, the master 210 and slave 212 exchange messages (263a, 263b).

In step 271, the slave 212 sends an idle sequence over the new high bandwidth lanes 262. During that time, the master 210 and the slave 212 continue to send high bandwidth data with a fixed delay over the active high bandwidth lanes 260 and 261, respectively. Optionally, the idle sequence is encoded using 7b/10b coding of the 7 LSBs of 8 bits of the slave PCS scrambler.

In step 272, the slave 212 sends to the master 210, over the active high bandwidth lanes 261, a synchronization sequence during an IPG. The synchronization sequence is encoded with a higher error resistance than the error resistance of a data payload, and thus the synchronization sequence enables the master 210 to identify the synchronization sequence with a higher probability than the probability of identifying a data payload. In one example, the synchronization sequence includes at least one bitwise complement 7b/10b code word of the expected idle code word, followed by at least one idle 7b/10b code word. In another example, illustrated in FIG. 2E, the synchronization sequence 264 includes two bitwise complement 7b/10b code words of the expected idle code words, followed by two idle 7b/10b code words, sent over the active high bandwidth lanes 261.

In parallel to a predetermined point within the synchronization sequence, the slave 212 sends to the master 210, over the new high bandwidth lanes 262, a known non-idle sequence. In one example, the known non-idle sequence is a single /K/ symbol. FIG. 2E illustrates one example where the /K/ symbol 265 is sent over the new high bandwidth lanes 262 in parallel to the second bitwise complement code word. In another example, the /K/ symbol is sent in parallel over both the s2m active high bandwidth lanes and the new high bandwidth lanes 262.

In step 273, the master 210 utilizes the known non-idle sequence, which was sent in parallel to the predetermined point within the synchronization sequence, for deskewing the new high bandwidth lanes 262 in relation to the s2m active high bandwidth lanes 261.

Optionally, steps 272-273 are repeated as needed. In one example, steps 272-273 are repeated randomly every 65 to 128 7b/10b symbols. The /K/ symbols are used by the master 201 to synchronize itself to the 10B symbol boundaries and for deskewing the new high bandwidth lanes 262. Additionally, the slave 212 may measure the round-trip delay between the slave 212 and the master 210 by counting the time between sending the /K/ symbol and receiving the reflected /K/ symbol. This unique method of transmitting at least one bitwise complement code word followed by at least one idea code word enables the master 210 to synchronize itself on the new high bandwidth lanes 262, without interrupting the fixed delay transmissions over the s2m and m2s active high bandwidth lanes. In one example, this unique method operates without buffers for storing and delaying the entire traffic to be sent over the s2m active high bandwidth lanes 261 during the setup time of the new high bandwidth lanes 262.

In optional step 274, the master 210 sends to the slave 212 a message indicating it is ready to receive data. Optionally, the ready message is transmitted over at least one of the m2s active high bandwidth lanes. Additionally or alternatively, the master and/or the slave may count time and/or clock cycles until the master is assumed to be ready to receive data.

And in step 275, during an IPG over the s2m active high bandwidth lanes, the slave 212 sends a transition sequence over both the s2m active high bandwidth lanes 261 and the new high bandwidth lanes 262. Immediately thereafter, the slave 212 is ready to transmit high bandwidth data packets over both the s2m active high bandwidth lanes 261 and the new high bandwidth lanes 262. The transition sequence includes at least one bitwise complement code word of the expected idle code word, followed by at least one idle code word that is sent over both the s2m active high bandwidth lanes 261 and the new high bandwidth lanes 262. In one example, illustrated in FIG. 2E, the transition sequence 268 includes two bitwise complement code words of the expected idle code words, followed by two idle code words, sent over both the s2m active high bandwidth lanes 261 and the new high bandwidth lanes 262, followed by high bandwidth data 269 sent over the s2m active high bandwidth lanes 261 and the new high bandwidth lanes 262.

Herein, a predetermined value, such as a predetermined confidence level or a predetermined threshold, is a fixed value and/or a value determined any time before performing a calculation that compares a certain value with the predetermined value. A value is also considered to be a predetermined value when the logic, used to determine whether a threshold that utilizes the value is reached, is known before start of performing computations to determine whether the threshold is reached.

Although some embodiments may depict serial operations, the embodiments may perform certain operations in parallel and/or in different orders from those depicted. Moreover, individual blocks illustrated in the figures may be functional in nature and therefore may not necessarily correspond to discrete hardware elements.

## Claims

1. A method for seamless activation of new high bandwidth lanes, comprising:
exchanging indications between first (212) and second (210) devices about activating the new high bandwidth lanes; wherein during the exchanging of the indications, the first device sends data to the second device using 8b/10b code words with a fixed delay over at least one first-to-second (f2s) active high bandwidth lane, the second device sends data to the first device using 8b/10b code words with a fixed delay over at least one second-to-first (s2f) active high bandwidth lane, and the new high bandwidth lanes are off; wherein adding the new high bandwidth lanes is to be done without interrupting the fixed delay transmissions over the f2s and s2f active high bandwidth lanes;
sending, by the first device, an idle sequence using 7b/10b code words over the new high bandwidth lanes in parallel to continue to send and receive the 8b/10b data with a fixed delay over the f2s and s2f active high bandwidth lanes;
sending, by the first device over the at least one f2s active high bandwidth lane, a synchronization sequence during an inter packet gap; and further comprising sending by the first device, over the new high bandwidth lanes and in parallel to a predetermined point within the synchronization sequence, a known non-idle sequence;
utilizing, by the second device, the known non-idle sequence for deskewing the new high bandwidth lanes; and
sending, by the first device, a transition sequence over both the at least one f2s active high bandwidth lane and the new high bandwidth lanes.

2. The method of claim 1, wherein immediately after sending the transition sequence, the first device is ready to transmit high bandwidth data using 8b/10b code words over both the at least one f2s active high bandwidth lane and the new high bandwidth lanes.

3. The method of claim 1, wherein the idle sequence is encoded using 7b/10b coding of the 7 least significant bits of 8 bits of a scrambler of the first device.

4. The method of claim 1, wherein the synchronization sequence is encoded with a higher error resistance than the error resistance of a data payload.

5. The method of claim 4, wherein the synchronization sequence comprises at least one bitwise complement 7b/10b code word of the expected idle code word, followed by at least one idle 7b/10b code word.

6. The method of claim 4, wherein the synchronization sequence comprises two bitwise complement 7b/10b code words of the expected idle code words, followed by two idle 7b/10b code words.

7. The method of claim 6, wherein the known non-idle sequence is a /K/ symbol within 7b/10b and 8b/10b line codes.

8. The method of claim 6, wherein the /K/ symbol is sent over the new high bandwidth lanes in parallel to the second bitwise complement code word.

9. The method of claim 4, wherein the /K/ symbol is sent in parallel over both the at least one f2s active high bandwidth lane and the new high bandwidth lanes.

10. The method of claim 1, wherein the exchanged indications are selected from messages and signal indications that are not conveyed by packets.

11. The method of claim 1, further comprising repeating the steps related to deskewing the new high bandwidth lanes randomly every 65 to 128 symbols of 7b/10b code words, at least until achieving deskew.

12. The method of claim 1, further comprising measuring, by the first device, the round-trip delay between the first device and the second device by the second device reflecting the received known non-idle sequence back to the first device over the s2f high bandwidth lane, and counting by the first device the time between the transmitted sequence to the reflected sequence.

13. The method of claim 1, wherein the transition sequence sent over both the at least one f2s active high bandwidth lane and the new high bandwidth lanes is sent during an inter packet gap over the m2s active high bandwidth lane.

14. The method of claim 1 wherein the device is a slave (212) and the second device is a master (210), wherein the f2s active high bandwidth lane is a slave to master (s2m) high bandwidth lane and the s2f active high bandwidth lane is a master to slave (m2s) high bandwidth lane; wherein the master sends clock indications to the slave over a clock lane (D0); and wherein the exchanged indications are about activating the new high bandwidth lanes from the slave (212) to the master (210).

## Patentansprüche

1. Verfahren zur reibungslosen Aktivierung neuer Leitungen hoher Bandbreite, das Folgendes umfasst:
Austauschen von Angaben zwischen einer ersten (212) und einer zweiten (210) Vorrichtung über ein Aktivieren der neuen Leitungen hoher Bandbreite; wobei die erste Vorrichtung während des Austauschens der Angaben Daten zur zweiten Vorrichtung unter Verwendung von 8b/10b-Codeworten mit einer festen Verzögerung über mindestens eine "first-to-second"-aktive (f2s-aktive) Leitung hoher Bandbreite sendet, die zweite Vorrichtung Daten zur ersten Vorrichtung unter Verwendung von 8b/10b-Codeworten mit einer festen Verzögerung über mindestens eine "second-to-first"-aktive (s2f-aktive) Leitung hoher Bandbreite sendet und die neuen Leitungen hoher Bandbreite abgeschaltet sind und das Hinzufügen der neuen Leitungen hoher Bandbreite ohne Unterbrechen der Übertragungen mit fester Verzögerung über die f2s- und s2f-aktiven Leitungen hoher Bandbreite erfolgen soll;
Senden durch die erste Vorrichtung einer Ruhefolge unter Verwendung von 7b/10b-Codeworten parallel über die neuen Leitungen hoher Bandbreite, um das Senden und Empfangen der 8b/10b-Daten mit einer festen Verzögerung über die f2s- und s2f-aktiven Leitungen hoher Bandbreite fortzusetzen;
Senden durch die erste Vorrichtung über die mindestens eine f2s-aktive Leitung hoher Bandbreite einer Synchronisationsfolge während einer Lücke zwischen Paketen; die ferner ein Senden einer bekannten Nichtruhefolge durch die erste Vorrichtung über die neuen Leitungen hoher Bandbreite und parallel zu einem vorgegebenen Punkt in der Synchronisationsfolge umfasst;
Verwenden durch die zweite Vorrichtung der bekannten Nichtruhefolge, um die neuen Leitungen hoher Bandbreite bezüglich Verschiebung zu korrigieren; und
Senden durch die erste Vorrichtung einer Übergangsfolge sowohl über die mindestens eine f2s-aktive Leitung hoher Bandbreite als auch die neuen Leitungen hoher Bandbreite.

2. Verfahren nach Anspruch 1, wobei die erste Vorrichtung unmittelbar nach dem Senden der Übergangsfolge bereit ist, Daten hoher Bandbreite unter Verwendung von 8b/10b-Codeworten sowohl über die mindestens eine f2s-aktive Leitung hoher Bandbreite als auch die neuen Leitungen hoher Bandbreite zu senden.

3. Verfahren nach Anspruch 1, wobei die Ruhefolge unter Verwendung einer 7b/10b-Codierung der 7 niedrigstwertigen Bits von 8 Bits einer Verschlüsselungsvorrichtung der ersten Vorrichtung codiert ist.

4. Verfahren nach Anspruch 1, wobei die Synchronisationsfolge mit einer höheren Fehlerbeständigkeit als die Fehlerbeständigkeit von Nutzlastdaten codiert ist.

5. Verfahren nach Anspruch 4, wobei die Synchronisationsfolge mindestens ein bitweises Komplement-7b/10b-Codewort des erwarteten Ruhecodeworts gefolgt von mindestens einem 7b/10b-Ruhecodewort umfasst.

6. Verfahren nach Anspruch 4, wobei die Synchronisationsfolge zwei bitweise Komplement-7b/10b-Codeworte der erwarteten Ruhecodeworte gefolgt von zwei 7b/10b-Ruhecodeworten umfasst.

7. Verfahren nach Anspruch 6, wobei die bekannte Nichtruhefolge ein /K/-Symbol in 7b/10b- und 8b/10b-Zeilencodes ist.

8. Verfahren nach Anspruch 6, wobei das /K/-Symbol über die neuen Leitungen hoher Bandbreite parallel zum zweiten bitweisen Komplementcodewort gesendet wird.

9. Verfahren nach Anspruch 4, wobei das /K/-Symbol parallel über sowohl die eine f2s-aktive Leitung hoher Bandbreite als auch die neuen Leitungen hoher Bandbreite gesendet wird.

10. Verfahren nach Anspruch 1, wobei die ausgetauschten Angaben aus Nachriten und Signalangaben, die nicht durch Pakete übermittelt werden, gewählt sind.

11. Verfahren nach Anspruch 1, das ferner ein Wiederholen der Schritte in Bezug auf das Verschiebungskorrigieren der neuen Leitungen hoher Bandbreite zufällig alle 65 bis 128 Symbole von 7b/10b-Codeworten mindestens bis zum Erreichen einer Verschiebungskorrektur umfasst.

12. Verfahren nach Anspruch 1, das ferner ein Messen durch die erste Vorrichtung der Umlaufverzögerung zwischen der ersten Vorrichtung und der zweiten Vorrichtung umfasst, indem die zweite Vorrichtung die bekannte Nichtruhezustandsfolge zur ersten Vorrichtung über die s2f-Leitung hoher Bandbreite zurückreflektiert und die erste Vorrichtung die Zeit zwischen der gesendeten Folge und der reflektierten Folge zählt.

13. Verfahren nach Anspruch 1, wobei die Übergangsfolge, die sowohl über die mindestens eine f2s-aktive Leitung hoher Bandbreite als auch die neuen Leitungen hoher Bandbreite gesendet wird, während einer Lücke zwischen Paketen über die m2s-aktive Leitung hoher Bandbreite gesendet wird.

14. Verfahren nach Anspruch 1, wobei die Vorrichtung ein Slave (212) und die zweite Vorrichtung ein Master (210) ist, wobei die f2s-aktive Leitung hoher Bandbreite eine Slave-to-Master-Leitung (s2m-Leitung) hoher Bandbreite ist und die s2f-aktive Leitung hoher Bandbreite eine Master-to-Slave-Leitung (m2s-Leitung) hoher Bandbreite ist; der Master Taktangaben über eine Taktleitung (D0) zum Slave sendet und die ausgetauschten Angaben über ein Aktivieren der neuen Leitungen hoher Bandbreite vom Slave (212) zum Master (210) sind.

## Revendications

1. Procédé pour une activation sans interruption de nouvelles voies à grande largeur de bande, comprenant les étapes consistant à :
échanger des indications entre un premier (212) et un deuxième (210) dispositif concernant l'activation des nouvelles voies à grande largeur de bande ; dans lequel, pendant l'échange des indications, le premier dispositif envoie des données au deuxième dispositif en utilisant des mots de code 8b/10b avec un délai fixe sur au moins une voie à grande largeur de bande active du premier au deuxième (f2s), le deuxième dispositif envoie des données au premier dispositif en utilisant des mots de code 8b/10b avec un délai fixe sur au moins une voie à grande largeur de bande active du deuxième au premier (s2f), et les nouvelles voies à grande largeur de bande sont désactivées ; dans lequel l'ajout des nouvelles voies à grande largeur de bande est à effectuer sans interrompre les transmissions à délai fixe sur les voies à grande largeur de bande actives f2s et s2f ;
envoyer, par le premier dispositif, une séquence libre en utilisant des mots de code 7b/10b sur les nouvelles voies à grande largeur de bande en parallèle pour continuer à envoyer et à recevoir les données 8b/10b avec un délai fixe sur les voies à grande largeur de bande actives f2s et s2f ;
envoyer, par le premier dispositif sur ladite au moins une voie à grande largeur de bande active f2s, une séquence de synchronisation pendant un intervalle entre paquets ; et comprenant en outre l'envoi par le premier dispositif, sur les nouvelles voies à grande largeur de bande et en parallèle à un point prédéterminé à l'intérieur de la séquence de synchronisation, d'une séquence non libre connue ;
utiliser, par le deuxième dispositif, la séquence non libre connue pour réaligner les nouvelles voies à grande largeur de bande ; et
envoyer, par le premier dispositif, une séquence de transition à la fois sur ladite au moins une voie à grande largeur de bande active f2s et les nouvelles voies à grande largeur de bande.

2. Procédé selon la revendication 1, dans lequel, tout de suite après l'envoi de la séquence de transition, le premier dispositif est prêt à transmettre des données à grande largeur de bande en utilisant des mots de code 8b/10b à la fois sur ladite au moins une voie à grande largeur de bande active f2s et les nouvelles voies à grande largeur de bande.

3. Procédé selon la revendication 1, dans lequel la séquence libre est codée en utilisant un codage 7b/10b des 7 bits les moins significatifs des 8 bits d'un brouilleur du premier dispositif.

4. Procédé selon la revendication 1, dans lequel la séquence de synchronisation est codée avec une résistance aux erreurs plus élevée que la résistance aux erreurs d'une charge utile de données.

5. Procédé selon la revendication 4, dans lequel la séquence de synchronisation comprend au moins un mot de code 7b/10b complémentaire au niveau du bit du mot de code libre attendu, suivi d'au moins un mot de code 7b/10b libre.

6. Procédé selon la revendication 4, dans lequel la séquence de synchronisation comprend deux mots de code 7b/10b complémentaires au niveau du bit du mot de code libre attendu, suivis de deux mots de code 7b/10b libres.

7. Procédé selon la revendication 6, dans lequel la séquence non libre connue est un symbole /K/ à l'intérieur de codes en ligne 7b/10b et 8b/10b.

8. Procédé selon la revendication 6, dans lequel le symbole /K/ est envoyé sur les nouvelles voies à grande largeur de bande en parallèle avec le deuxième mot de code complémentaire au niveau du bit.

9. Procédé selon la revendication 4, dans lequel le symbole /K/ est envoyé en parallèle à la fois sur ladite au moins une voie à grande largeur de bande active f2s et les nouvelles voies à grande largeur de bande.

10. Procédé selon la revendication 1, dans lequel les indications échangées sont sélectionnées parmi des messages et des indications de signal qui ne sont pas transportés par paquets.

11. Procédé selon la revendication 1, comprenant en outre la répétition des étapes liées au réalignement des nouvelles voies à grande largeur de bande de manière aléatoire tous les 65 à 128 symboles de mots de code 7b/10b, au moins jusqu'à obtention du réalignement.

12. Procédé selon la revendication 1, comprenant en outre la mesure, par le premier dispositif, du temps de propagation en boucle entre le premier dispositif et le deuxième dispositif par le deuxième dispositif qui renvoie la séquence non libre connue reçue au premier dispositif sur la voie à grande largeur de bande s2f, et le comptage, par le premier dispositif, du temps entre la séquence transmise et la séquence renvoyée.

13. Procédé selon la revendication 1, dans lequel la séquence de transition envoyée à la fois sur ladite au moins une voie à grande largeur de bande active f2s et les nouvelles voies à grande largeur de bande est envoyée pendant un intervalle entre paquets sur la voie à grande largeur de bande active m2s.

14. Procédé selon la revendication 1, dans lequel le dispositif est un esclave (212) et le deuxième dispositif est un maître (210), dans lequel la voie à grande largeur de bande active f2s est un esclave de la voie à grande largeur de bande (s2m) maître et la voie à grande largeur de bande active s2f est un maître pour la voie à grande largeur de bande (m2s) esclave ; dans lequel le maître envoie des indications d'horloge à l'esclave sur une voie d'horloge (D0) ; et dans lequel les indications échangées concernent l'activation des nouvelles voies à grande largeur de bande de l'esclave (212) au maître (210).
